(19) Europäisches Patentamt
European Patent Office
Office européen des brevets

(11) Veröffentlichungsnummer: **0 018 492**
**B1**

(12) **EUROPÄISCHE PATENTSCHRIFT**

(45) Veröffentlichungstag der Patentschrift: **21.07.82**

(51) Int. Cl.³: **A 01 N 57/12**, A 01 N 25/02 // (A01N57/12, 33/12)

(21) Anmeldenummer: **80101498.6**

(22) Anmeldetag: **21.03.80**

(54) **Wässerige Desinfektionslösung.**

(30) Priorität: **23.04.79 DE 2916318**

(43) Veröffentlichungstag der Anmeldung: **12.11.80 (Patentblatt 80/23)**

(45) Bekanntmachung des Hinweises auf die Patenterteilung: **21.07.82 Patentblatt 82/29**

(84) Benannte Vertragsstaaten: **AT BE CH DE FR GB IT LU NL SE**

(56) Entgegenhaltungen:
**CH - A - 418 532**
**DE - A - 2 134 854**
**DE - A - 2 645 211**
**DE - B - 2 114 145**
**GB - A - 1 415 190**
**US - A - 3 004 056**
**US - A - 3 004 057**
**US - A - 3 017 278**
**US - A - 3 326 806**

(73) Patentinhaber: **HOECHST AKTIENGESELLSCHAFT**
**Postfach 80 03 20**
**D-6230 Frankfurt/Main 80 (DE)**

(72) Erfinder: **Sorbe, Günter**
**Komturring 4**
**D-5030 Hürth (DE)**
Erfinder: **Westermann, Lothar**
**Ludwigstrasse 8**
**D-5000 Köln 90 (DE)**
Erfinder: **Wasel-Nielen, Horst-Dieter, Dr.**
**Giselherweg 1**
**D-5030 Hürth (DE)**
Erfinder: **Klose, Werner, Dr.**
**Grachtstrasse 14**
**D-5042 Erftstadt (DE)**

**EP 0 018 492 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

## Wässerige Desinfektionslösung

Die vorliegende Erfindung betrifft eine wässerige Desinfektionslösung, enthaltend eine biozide quarternäre Ammoniumverbindung sowie gegebenenfalls weitere Zusatzstoffe mit Reinigerwirkung, wobei die biozide Wirkung der Ammoniumverbindung durch die Gegenwart bestimmter Derivate der Orthophosphorsäure erhöht, bzw. die Einwirkungszeit der Desinfektionslösung auf den zu desinfizierenden Gegenstand verkürzt wird.

Dies ist besonders wichtig bei der Flächenreinigung und -desinfektion in beispielsweise Nahrungsmittel- und Landwirtschaftsbetrieben oder in öffentlichen Einrichtungen, wie Krankenhäuser oder Schwimmbäder, wo Oberflächen aus Metall, Glas, Keramik oder Kunststoffen Keimfrei zu halten sind.

Die Verwendung quarternärer Ammoniumverbindungen, im Folgenden « Quats » genannt, im Hygiene- und Desinfektionsbereich wird bereits von M.H. Angele in « Seifen-Öle-Fette, Wachse », 104. Jg. — Nr. 15/1978, Seiten 433-436 sowie 104. Jg. — Nr. 17/1978, Seiten 478 und 479 beschrieben. Als Quats von herausragender Bedeutung werden Didecyldimethylammoniumchlorid und Alkyldimethylbenzylammoniumhalogenide (Dodigen 226®, Hoechst Aktiengesellschaft, Frankfurt/M) genannt. Aus vorgenannten Veröffentlichungen ist außerdem zu entnehmen, daß die mikrobiologische Wirksamkeit von Quats in Kombination mit aliphatischen Mono- und Dialdehyden durch Synergismus erhöht werden kann, wobei bekanntlich Aldehyde als solche bereits eine biozide Wirkung ergeben. Als Maß für die biozide Wirksamkeit einer Substanz wird normalerweise die minimale mikrobizide Konzentration der Substanz in ppm nach einer bestimmten Einwirkungszeit, beispielsweise 2,5 ; 5 oder 15 Minuten zugrunde gelegt. Die Verwendung von Aldehyden mit biozider Wirksamkeit ist mit dem Nachteil der Geruchsbelästigung verbunden, so daß man bestrebt ist, Synergisten für Quats zu ermitteln, die vorgenannten Nachteil nicht aufweisen.

Überraschenderweise wurde nunmehr gefunden, daß die biozide Wirksamkeit wässeriger Lösungen der bekannten Quats in Gegenwart von sauren Orthophosphorsäurepartialestern erhöht bzw. die Einwirkungszeit dieser Lösungen auf das zu desinfizierende Medium verringert wird. Da saure Orthophosphorsäurepartialester bisher lediglich als Reinigerkomponente in entsprechenden Formulierungen Anwendung fanden und eine biozide Wirkung dieser Substanzen nicht bekannt ist, muß vorgenannter Einfluß der sauren Ester auf Quats deshalb synergistischer Art sein.

Gegenstand der Erfindung sind somit wässerige Desinfektionslösungen, enthaltend eine quarternäre Ammoniumverbindung sowie gegebenenfalls weitere Zusatzstoffe mit Reinigerwirkung, welche dadurch gekennzeichnet sind, daß die wässerigen Lösungen zusätzlich mindestens einen sauren Orthophosphorsäurepartialester enthalten.

Die quarternäre Ammoniumverbindung kann beispielsweise ein Gemisch von Alkyldimethyl-benzylammoniumchloriden der allgemeinen Formel (I)

$$\left[ CH_3 - (CH_2)_n - \overset{\displaystyle CH_3}{\underset{\displaystyle CH_3}{\overset{|}{\underset{|}{N}}}} - CH_2 - C_6H_5 \right]^{(+)} Cl^{(-)} \qquad (I)$$

sein, wobei n eine Zahl von 12-18 bedeutet.

Weitere geeignete quarternäre Ammoniumverbindungen sind (C12-C18)-Alkyl-dimethyl-dichlorbenzyl-ammoniumchlorid und Didecyldimethyl-ammoniumchlorid.

Vorzugsweise liegt die quarternäre Ammoniumverbindung in der wässerigen Lösung in einer Konzentration von etwa 0,01 bis 20 Gew.% vor.

Gemäß einer bevorzugten Ausführungsform der Erfindung enthält die wässerige Desinfektionslösung als sauren Orthophosphorsäurepartialester.

a) ein Produkt der allgemeinen Formel (II)

$$R\ (OC_2H_3R')_n\ O\ \overset{\displaystyle O}{\underset{\displaystyle OH}{\overset{\|}{\underset{|}{P}}}}\ O\ R'' \qquad (II)$$

in welcher R einen linearen oder verzweigten, substituierten oder nichtsubstituierten Alkylrest mit 1-12 C-Atomen, einen Arylrest oder einen Alkarylrest mit 6-15 C-Atomen bedeutet, wobei die Substituenten Hydroxyl-, Amino-, Alkylamino- oder Dialkylaminogruppen sind, R' für Wasserstoff oder Methyl steht, R'' Wasserstoff oder einen Rest $R(OC_2H_3R')_n$ bedeutet, wobei n eine ganze Zahl von Null bis 15 ist, oder

b) ein Gemisch von Orthophosphorsäurepartialestern, das durch Umsetzung von Gemischen aus

einwertigen und mehrwertigen organischen Hydroxylverbindungen mit $P_4O_{10}$ erhalten wurde.

Insbesondere sind Orthophosphorsäuremono- oder -diester oder Gemische davon geeignet, wobei die Estergruppen ein Methyl-, Ethyl-, 2-Hydroxyethyl-, 2-Aminoethyl-, 2-(Dimethylamino-)ethyl-, 2-Methoxyethyl-, 2-Ethoxyethyl-, 2-Butoxyethyl-, n-Propyl-, Isopropyl-, n-Butyl-, Isobutyl-, sec.-Butyl-, Amyl-, n-Dodecylpolyoxethyl-, Phenyl-, Phenylpolyoxethyl- oder Nonylphenylpolyoxethyl-rest sind.

Der Gehalt des sauren Phosphorsäureesters in der wässerigen Desinfektionslösung beträgt vorteilhafterweise etwa 10 bis 99 Gew.%.

Die erfindungsgemäße Lösung kann natürlich auch bekannte Zusatzstoffe mit Reinigerwirkung, wie z.B. Tenside und/oder Hilfsstoffe enthalten. In Anwendung dieser Lösung, die als solche ein Konzentrat darstellt, ist sie in der Praxis mit Wasser auf etwa das 100- bis 200-fache zu verdünnen. Ihre biozide Wirkung erstreckt sich beispielsweise auf Staph. aureus SG 511, E. Coli 055, Proteus Mirabilis oder Pseudomonas Aeruginosa.

Die Vorteile der erfindungsgemäßen Desinfektionslösung bestehen darin, daß durch den Zusatz des sauren Orthophosphorsäurepartialesters die bekannte biozide Wirkung der quarternären Ammoniumverbindungen synergistisch verstärkt wird, wobei der Zusatz beim Verbraucher, im Gegensatz zu bioziden Aldehyden, keine Geruchsirritationen hervorruft.

Die biozide Wirksamkeit der erfindungsgemäßen Desinfektionslösungen soll in folgendem Beispiel demonstriert werden.

## Beispiel

Es wurde die biozide Wirksamkeit von wässerigen Lösungen unterschiedlicher Konzentrationen aus

a) Orthophosphorsäuremethyl-isopropylester (MI) und einem Gemisch von Alkyl-dimethyl-benzyl-ammonium-chloriden der allgemeinen Formel

$$\left[ CH_3 - (CH_2)_n - \overset{\displaystyle CH_3}{\underset{\displaystyle CH_3}{\overset{|}{\underset{|}{N}}}} - CH_2 - C_6H_5 \right]^{(+)} Cl^{(-)} \qquad \text{(D)}$$

wobei n eine Zahl von 12-18 ist und welches als Hendelsprodukt unter dem Nanem Dodigen 226®, Hoechst Aktiengesellschaft, Frankfurt/M. erhältlich ist,

b) 85 gew.%ige Orthophosphorsäure und Dodigen 226® sowie

c) einem Gemisch von Orthophosphorsäuremonomethyl- und -dimethylester im Gewichtsverhältnis von etwa 1 zu 1 (MDM) und Dodigen 226®

gegenüber folgenden Testkeimen :

Staph. aureus SG 511 ; E. Coli 055 ; Proteus Mirabilis und Pseudomonas Aeruginosa ermittelt.

Von vorgenannten Keimen wurden unverdünnte 24 h-Kulturen verwendet. Als Nährmedium für die Keime diente ein Fleischextraktbouillon (FEB) mit Zusatz von 3 Gew.% eines Polyoxyäthylenderivates von Sorbitanhydriden, das teilweise mit Fettsäure verestert ist (Tween®, Firma Atlas Chemical Industries N.V., Everberg) sowie von 0,3 Gew.% Lecithin.

Versuchsdurchführung :

Es wurden in verschiedene Teströhrchen jeweils 5 ml der jeweiligen bioziden wässerigen Wirkstofflösungen gegeben und anschließend in jedes Röhrchen 3 Tropfen unverdünnter Kultursuspension hinzugefügt. Nach 5 bzw. 15 Minuten wurde aus den einzelnen Röhrchen mit einer kalibrierten Platinöse mit einem Innendurchmesser von 3 mm und einer Drahtstärke von 0,5 mm eine Probe des Inhalts entnommen und in 10 ml des Fleischextraktbouillons (FEB) eingetragen. Das Gemisch aus FEB und Probe wurde 48 Stunden bei 37 °C bebrütet. Danach wurde die Trübung vorerwähnten Gemisches gemessen. Die minimale mikrobizide Konzentration, bei der kein Wachstum beobachtet wurde, wurde als bakterizide Konzentration (BZK) definiert. Das Ergebnis der bioziden Wirksamkeit der getesteten wässerigen Desinfektionslösungen a), b), c) ist in den nachfolgenden Tabellen 1 und 2 dargestellt.

(Siehe die Tabelle 1, Seite 4)

TABELLE 1

| Testkeim | MI^xx | D^x 5 min | D^x 15 min | $H_3PO_4$^xx | D^x 5 min | D^x 15 min |
|---|---|---|---|---|---|---|
| Staph. aureus SG 511 | - | 31,25 | 31,25 | - | 31,25 | 31,25 |
| | 10 | < 2,0 | < 2,0 | 10 | 31,25 | < 2,0 |
| | 5 | 31,25 | 15,6 | 5 | > 31,25 | 31,25 |
| | 2,5 | 31,25 | 15,6 | 2,5 | > 31,25 | 31,25 |
| | 1,25 | > 31,25 | > 31,25 | 1,25 | > 31,25 | > 31,25 |
| | 0,625 | > 31,25 | > 31,25 | 0,625 | > 31,25 | > 31,25 |
| E. coli O55 | - | 125 | 31,25 | - | 125 | 31,25 |
| | 10 | < 4,0 | < 4,0 | 10 | 31,25 | 31,25 |
| | 5 | < 4,0 | < 4,0 | 5 | 62,5 | 31,25 |
| | 2,5 | 62,5 | < 4,0 | 2,5 | > 62,5 | 31,25 |
| | 1,25 | 62,5 | 15,6 | 1,25 | > 62,5 | 31,25 |
| | 0,625 | 62,5 | 62,5 | 0,625 | > 62,5 | 31,25 |
| Proteus mirabilis | - | 250 | < 62,5 | - | > 250 | < 62,5 |
| | 10 | < 15,6 | < 15,6 | 10 | > 250 | > 250 |
| | 5 | < 15,6 | < 15,6 | 5 | > 250 | > 250 |
| | 2,5 | > 250 | < 15,6 | 2,5 | > 250 | > 250 |
| | 1,25 | > 250 | > 250 | 1,25 | > 250 | > 250 |
| | 0,625 | > 250 | > 250 | 0,625 | > 250 | > 250 |
| Pseudomonas Aeruginosa 9027 | - | 250 | 250 | - | 250 | 250 |
| | 10 | < 15,6 | < 15,6 | 10 | < 15,6 | < 15,6 |
| | 5 | < 15,6 | < 15,6 | 5 | < 15,6 | < 15,6 |
| | 2,5 | < 15,6 | < 15,6 | 2,5 | < 15,6 | < 15,6 |
| | 1,25 | < 15,6 | < 15,6 | 1,25 | < 15,6 | < 15,6 |
| | 0,625 | < 15,6 | < 15,6 | 0,625 | < 15,6 | < 15,6 |

D^x : Dodigen 226® — Konzentration in µg/ml.
xx : Konzentrationsangabe in mg/ml.
BZK : Bakterizide Konzentration.
< : BZK niedriger als die angegebene Konzentration.
> : BZK höher als die angegebene Konzentration.

(Siehe die Tabelle 2, Seite 5)

TABELLE 2

| Testkeim | MDM[xx] | D[x] 5 min | D[x] 15 min |
|---|---|---|---|
| Staph. aureus SG 511 | - | 31,25 | 31,25 |
| | 10 | 15,6 | < 2,0 |
| | 5 | 31,25 | 15,6 |
| | 2,5 | > 31,25 | 31,25 |
| | 1,25 | > 31,25 | 31,25 |
| | 0,625 | > 31,25 | 31,25 |
| E. coli 055 | - | 125 | 31,25 |
| | 10 | < 4,0 | < 4,0 |
| | 5 | < 4,0 | < 4,0 |
| | 2,5 | 31,25 | < 4,0 |
| | 1,25 | 31,25 | 31,25 |
| | 0,625 | 62,5 | 62,5 |
| Proteus mirabilis | - | 250 | < 62,5 |
| | 10 | < 15,6 | < 15,6 |
| | 5 | < 15,6 | < 15,6 |
| | 2,5 | > 250 | < 15,6 |
| | 1,25 | > 250 | > 250 |
| | 0,625 | > 250 | > 250 |
| Pseudo-monas Aeruginosa 9027 | - | 250 | 250 |
| | 10 | < 15,6 | < 15,6 |
| | 5 | < 15,6 | < 15,6 |
| | 2,5 | < 15,6 | < 15,6 |
| | 1,25 | < 15,6 | < 15,6 |
| | 0,625 | < 15,6 | < 15,6 |

Beurteilung der Ergebnisse der Tabellen 1 und 2:

Die bakterizide Wirkung von Dodigen 226® wird durch MI-Zusätze in Konzentrationen von 10 mg/ml bei Staph. aureus-Testkeimen deutlich verstärkt. Bei Konzentrationen von 5 bzw. 2,5 mg/ml ist die Wirkungsverstärkung weniger ausgeprägt. Im Konzentrationsbereich von 1,25 und 0,625 mg/ml wird der bakterizide Effekt des Dodigen 226® abgeschwächt. Bei E. Coli-Testkeimen wird die Wirkung von Dodigen 226® durch MI noch ausgeprägter verstärkt, wobei die Wirkungsverstärkung mindestens bis 0,625 mg MI/ml reicht. Für Proteus mirabilis-Testkeime gilt in etwa das für Staph. aureus gesagte. Bei Pseudomonas aeruginosa-Testkeimen verstärken alle eingesetzten MI-Konzentrationen den Dodigen 226®-Effekt.

MDM verstärkt die Dodigen 226®-Wirkung bei Staph. aureus-Testkeimen in Konzentrationen von 5 und 10 mg. MDM erhöht die Wirkung bei E. Coli im gesamten geprüften Konzentrationsbereich. Für Proteus Mirabilis-Testkeime gilt das für Staph. aureus gesagte und bei Pseudomonas-Testkeimen wird Dodigen 226® ebenfalls von allen MDM-Konzentrationen in der Wirkung verstärkt.

Die Vergleichssubstanz $H_3PO_4$ zeigt im Gegensatz zu den erfindungsgemäßen Substanzen nur eine sehr geringe Wirkungsverstärkung bei Staph. aureus und E. Coli. In den niedrigen Konzentrationen (kleiner als 5 mg/ml) ist bei diesen beiden Keimen eine antagonistische Wirkung zu erkennen. Bei Proteus Mirabilis wirkt $H_3PO_4$ in allen eingesetzten Konzentrationen antagonistisch, während bei Pseudomonas-Testkeimen die Dodigenwirkung ebenfalls von allen Konzentrationen des $H_3PO_4$ verstärkt wird. Die Substanzen MDM und noch stärker MI erhöhen demnach die bakterizide Wirkung von Dodigen 226® im

Zeitfaktor geeigneten Konzentrationsbereich. $H_3PO_4$ besitzt diese Eigenschaft nicht oder nur in viel geringerem Maße.

**Ansprüche**

1. Wässerige Desinfektionslösung, enthaltend eine quarternäre Ammoniumverbindung sowie gegebenenfalls weitere Zusatzstoffe mit Reinigerwirkung, dadurch gekennzeichnet, daß die wässerige Lösung zusätzlich mindestens einen sauren Orthophosphorsäurepartialester enthält.

2. Lösung nach Anspruch 1, dadurch gekennzeichnet, daß die quarternäre Ammoniumverbindung ein Gemisch von Alkyldimethyl-benzyl-ammoniumchloriden der allgemeinen Formel (I)

$$\left[ CH_3 - (CH_2)_n - \underset{CH_3}{\overset{CH_3}{\overset{|}{\underset{|}{N}}}} - CH_2 - C_6H_5 \right]^{(+)} Cl^{(-)} \qquad (I)$$

ist, wobei n eine Zahl von 12-18 bedeutet.

3. Lösung nach Anspruch 1 oder 2, dadurch gekennzeichnet, daß sie die quarternäre Ammoniumverbindung in einer Konzentration von etwa 0,01 bis 20 Gew.% enthält.

4. Lösung nach Anspruch 1-3, dadurch gekennzeichnet, daß der saure Orthophosphorsäurepartialester.

a) ein Produkt der allgemeinen Formel (II)

$$R\ (OC_2H_3R')_n\ O\ \underset{OH}{\overset{O}{\overset{\|}{\underset{|}{P}}}}\ O\ R'' \qquad (II)$$

ist, in welcher R einen linearen oder verzweigten, substituierten oder nichtsubstituierten Alkylrest mit 1-12 C-Atomen, einen Arylrest oder einen Aralkylrest mit 6-15 C-Atomen bedeutet, wobei die Substituenten Hydroxyl-, Amino-, Alkylamino- oder Dialkylaminogruppen sind, R' für Wasserstoff oder Methyl steht, R'' Wasserstoff oder einen Rest $R(OC_2H_3R')_n$ bedeutet, wobei n eine ganze Zahl von Null bis 15 ist, oder

b) ein Gemisch von Orthophosphorsäurepartialestern ist, das durch Umsetzung von Gemischen aus einwertigen und mehrwertigen organischen Hydroxylverbindungen mit $P_4O_{10}$ erhalten wurde.

5. Lösung nach Anspruch 1-4, dadurch gekennzeichnet, daß der Orthophosphorsäurepartialester ein Orthophosphorsäuremono- oder -diester oder ein Gemisch davon ist, wobei die Estergruppen ein Methyl-, Ethyl-, 2-Hydroxyethyl-, 2-Aminoethyl-, 2-(Dimethylamino-)ethyl-, 2-Methoxyethyl-, 2-Ethoxyethyl-, 2-Butoxyethyl-, n-Propyl-, Isopropyl-, n-Butyl-, Isobutyl-, sec.-Butyl-, Amyl-, n-Dodecylpolyoxethyl-, Phenyl-, Phenylpolyoxethyl- oder Nonylphenylpolyoxethyl-rest sind.

6. Lösung nach Anspruch 1-5, dadurch gekennzeichnet, daß der Orthophosphorsäurepartialester ein Estergemisch ist, das durch Umsetzung von $P_4O_{10}$ mit einem Gemisch aus Methanol und Ethylenglykol oder Ethanol und Ethylenglykol oder n-Butanol und Ethylenglykol oder n-Butanol und Diethylenglykol oder Isopropanol und Glycerin oder n-Dodecylpolyglykolether und Ethylenglykol erhalten wurde.

7. Lösung nach Anspruch 1-6, dadurch gekennzeichnet, daß sie den Orthophosphorsäurepartialester in einer Konzentration von 10 bis 99 Gew.% enthält.

8. Lösung nach Anspruch 1-7, dadurch gekennzeichnet, daß sie als Zusatzstoffe mit Reinigerwirkung Tenside und/oder Hilfsstoffe enthält.

**Claims**

1. Aqueous disinfecting solution containing a quaternary ammonium compound and optionally further addends producing a cleaning effect, characterized in that the aqueous solution additionally contains at least one acid orthophosphoric acid partial ester.

2. Solution as claimed in claim 1, wherein the quaternary ammonium compound is a mixture of alkyldimethyl-benzyl-ammonium chlorides of the general formula (I)

$$\left[ CH_3 - (CH_2)_n - \overset{\displaystyle CH_3}{\underset{\displaystyle CH_3}{N}} - CH_2 - C_6H_5 \right]^{(+)} Cl^{(-)} \qquad (I)$$

in which n stands for a number of 12 to 18.

3. Solution as claimed in claim 1 or 2, containing the quaternary ammonium compound in a concentration of about 0.01 to 20 weight %.

4. Solution as claimed in claims 1 to 3, wherein the acid orthophosphoric acid partial ester is

a) a product of general formula (II)

$$R\ (OC_2H_3R')_n\ O\ \overset{\displaystyle O}{\underset{\displaystyle OH}{\overset{\|}{\underset{|}{P}}}}\ O\ R'' \qquad (II)$$

in which R stands for a linear of branched, substituted or unsubstituted alkyl group with 1 to 12 carbon atoms, an aryl group or an aralkyl group with 6 to 15 carbon atoms, the substituents being hydroxy, amino, alkylamino or dialkylamino groups, R′ stands for hydrogen or methyl, R″ stands for hydrogen or a $R(OC_2H_3R')_n$ group, n being a whole number of 0 to 15, or

b) a mixture of orthophosphoric acid partial esters, the mixture having been obtained by reacting a mixture of monovalent and polyvalent organic hydroxyl compounds with $P_4O_{10}$.

5. Solution as claimed in claims 1 to 4, wherein the orthophosphoric acid partial ester is an orthophosphoric acid monoester or diester or a mixture there of, the ester groups being a methyl, ethyl, 2-hydroxyethyl, 2-aminoethyl, 2-(dimethylamino-)ethyl, 2-methoxyethyl, 2-ethoxyethyl, 2-butoxyethyl, n-propyl, isopropyl, n-butyl, isobutyl, sec. butyl, amyl, n-dodecylpolyoxethyl, phenyl, phenylpolyoxethyl or nonylphenylpolyoxethyl group.

6. Solution as claimed in claims 1 to 5, wherein the orthophosphoric acid partial ester is an ester mixture which has been obtained by reacting $P_4O_{10}$ with a mixture of methanol and ethylene glycol or ethanol and ethylene glycol or n-butanol and ethylene glycol or n-butanol and diethylene glycol or isopropanol and glycerol or n-dodecylpolyglycol ether and ethylene glycol.

7. Solution as claimed is claims 1 to 6, containing the orthophosphoric acid partial ester in a concentration of 10 to 99 weight %.

8. Solution as claimed in claims 1 to 7, containing surfactants and/or auxiliary products as addends producing a cleaning effect.

**Revendications**

1. Solution aqueuse désinfectante contenant un composé d'ammonium quaternaire et le cas échéant d'autres additifs à effet nettoyant, caractérisé en ce que la solution aqueuse contient en outre au moins un ester partiel acide de l'acide orthophosphorique.

2. Solution selon la revendication 1, caractérisée en ce que le composé d'ammonium quaternaire est un mélange de chlorures d'alkyldiméthylbenzylammonium de formule générale I

$$\left[ CH_3 - (CH_2)_n - \overset{\displaystyle CH_3}{\underset{\displaystyle CH_3}{N}} - CH_2 - C_6H_5 \right]^{(+)} Cl^{(-)} \qquad (I)$$

dans laquelle n est un nombre de 12 à 18.

3. Solution selon la revendication 1 ou 2, caractérisée en ce qu'elle contient le composé d'ammonium quaternaire à une concentration d'environ 0,01 à 20 % en poids.

4. Solution selon les revendications 1 à 3, caractérisée en ce que l'ester partiel acide de l'acide orthophosphorique est

a) un produit de formule générale II

$$R\ (OC_2H_3R')_n\ O\ \overset{\displaystyle O}{\underset{\displaystyle OH}{\overset{\|}{\underset{|}{P}}}}\ O\ R'' \qquad (II)$$

dans laquelle R représente un groupe alkyle linéaire ou ramifié, substitué ou non substitué, en $C_1$-$C_{12}$, un groupe aryle ou un groupe aralkyle ou $C_6$-$C_{15}$, les substituants étant des groupes hydroxy, amino, alkylamino ou dialkylamino, R' représente l'hydrogène ou un groupe méthyle, R" représente l'hydrogène ou un groupe $R(OC_2H_3R')_n$, n étant un nombre entier de 0 à 15, ou bien

b) un mélange d'esters partiels de l'acide orthophosphorique qui a été obtenu par réaction de mélanges de composés organiques hydroxylés monovalents ou polyvalents avec $P_4O_{10}$.

5. Solution selon les revendications 1 à 4, caractérisée en ce que l'ester partiel de l'acide orthophosphorique est un mono- ou di-ester de l'acide orthophosphorique ou un mélange de tels esters dans lequel les groupes esters sont un groupe méthyle, éthyle, 2-hydroxyéthyle, 2-aminoéthyle, 2-(diméthylamino)-éthyle, 2-méthoxyéthyle, 2-éthoxyéthyle, 2-butoxyéthyle, n-propyle, isopropyle, n-butyle, isobutyle, sec.-butyle, amyle, n-dodécylpolyoxyéthyle, phényle, phénylpolyoxyéthyle ou nonylphénylpolyoxyéthyle.

6. Solution selon les revendications 1 à 5, caractérisée en ce que l'ester partiel de l'acide orthophosphorique est un mélange d'esters qui a été obtenu par réaction de $P_4O_{10}$ avec un mélange de méthanol et d'éthylèneglycol ou d'éthanol et d'éthylèneglycol ou de n-butanol et d'éthylèneglycol ou de n-butanol et de diéthylèneglycol ou d'isopropanol et de glycérol ou d'éther de polyglycol de l'alcool n-dodécylique et d'éthylèneglycol.

7. Solution selon les revendications 1 à 6, caractérisée en ce qu'elle contient l'ester partiel de l'acide orthophosphorique à une concentration de 10 à 99 % en poids.

8. Solution selon les revendications 1 à 7, caractérisée en ce qu'elle contient en tant qu'additifs à effet nettoyant des agents tensioactifs et/ou des produits auxiliaires.